## Europäisches Patentamt
## European Patent Office
## Office européen des brevets

(19)

(11) **EP 1 202 087 B1**

(12) **FASCICULE DE BREVET EUROPEEN**

(45) Date de publication et mention
de la délivrance du brevet:
**08.12.2004 Bulletin 2004/50**

(51) Int Cl.$^7$: **G02B 6/16**

(21) Numéro de dépôt: **01402563.9**

(22) Date de dépôt: **04.10.2001**

(54) **Fibre pour la compensation de la dispersion chromatique en bande S d'une fibre monomode**

Faser zur Kompensierung der chromatischen Dispersion einer Monomode-Faser im S-Band

S-band chromatic dispersion compensating fiber

(84) Etats contractants désignés:
**AT BE CH CY DE DK ES FI FR GB GR IE IT LI LU
MC NL PT SE TR**

(30) Priorité: **16.10.2000 FR 0013210**

(43) Date de publication de la demande:
**02.05.2002 Bulletin 2002/18**

(73) Titulaire: **ALCATEL
75008 Paris (FR)**

(72) Inventeurs:
• **Fleury, Ludovic
78390 Bois d'Arcy (FR)**
• **Beaumont, Florent
78700 Conflans ste Honorine (FR)**
• **Sillard, Pierre
78150 Le Chesnay (FR)**
• **de Montmorillon, Louis-Anne
75017 Paris (FR)**
• **Gorlier, Maxime
75017 Paris (FR)**
• **Nouchi, Pascale
78600 Maisons Laffitte (FR)**

(74) Mandataire: **Blokland, Arie
Algemeen Octrooi- en Merkenbureau,
P.O. Box 645
5600 AP Eindhoven (NL)**

(56) Documents cités:
**EP-A- 0 935 146          EP-A- 0 938 018
EP-A- 0 989 420          EP-A- 1 030 199
WO-A-00/33113**

• **KANI J ET AL: "NOVEL 1470-NM-BAND WDM
TRANSMISSION AND ITS APPLICATION TO
ULTRA-WIDE-BAND WDM TRANSMISSION"
IEICE TRANSACTIONS ON
ELECTRONICS,INSTITUTE OF ELECTRONICS
INFORMATION AND COMM. ENG. TOKYO,JP,
vol. E82-C, no. 8, août 1999 (1999-08), pages
1397-1405, XP000930695 ISSN: 0916-8524**

**Description**

La présente invention concerne le domaine des transmissions par fibre optique, et plus spécifiquement, la compensation de la dispersion chromatique et de la pente de dispersion chromatique dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 10 Gbit/s; l'objectif est d'obtenir, pour toutes les valeurs de longueur d'onde du multiplex, une compensation chromatique cumulée sensiblement nulle sur la liaison, de sorte à limiter l'élargissement des impulsions. Sur l'ensemble d'un système de transmission, une valeur cumulée de quelques centaines de ps/nm pour la dispersion est acceptable. Il est aussi intéressant d'éviter au voisinage des longueurs d'onde utilisées dans le système les valeurs nulles de la dispersion chromatique, pour lesquelles les effets non-linéaires sont plus importants. Enfin, il est aussi intéressant de limiter la pente de dispersion chromatique sur la plage du multiplex de sorte à éviter ou limiter les distorsions entre les canaux du multiplex. Ce problème de compensation de la dispersion chromatique et de la pente de la dispersion chromatique est particulièrement aigu pour les systèmes de transmission à très haut débit - typiquement pour les systèmes de transmission à multiplexage en longueur d'onde avec un débit par canal de 40 Gbit/s et au-delà. Le problème est d'autant plus aigu que la largeur de bande augmente et atteint des valeurs supérieures ou égales à 30 nm, voire 35 nm.

On utilise classiquement comme fibre de ligne pour les systèmes de transmissions à fibres optiques des fibres à saut d'indice comme fibre de ligne; ces fibres sont couramment appelées fibres monomode ou SMF (de l'anglais "single mode fiber"). La demanderesse commercialise ainsi sous référence ASMF 200 une fibre monomode à saut d'indice présentant une longueur d'onde $\lambda_0$ d'annulation de la dispersion chromatique entre 1300 et 1320 nm, et une dispersion chromatique de 3,5 ps/(nm.km) dans une plage de 1285-1330 nm, et de 18 ps/nm.km à 1550 nm. La pente de dispersion chromatique à 1550 nm est de l'ordre de 0.06 ps/(nm$^2$.km). Dans les systèmes de transmission connus, cette fibre est utilisée pour la transmission de signaux à des longueurs d'onde voisines de 1550 nm (bande C).

Pour compenser dans cette bande la dispersion chromatique et la pente de dispersion chromatique dans des fibres SMF ou des fibres NZ-DSF (acronyme de l'anglais « non-zero dispersion shifted fibers », fibres à dispersion décalée non-nulle) utilisées comme fibres de ligne, il est connu d'utiliser des faibles longueurs de fibre de compensation de dispersion ou DCF (Dispersion Compensating Fiber en langue anglaise). Cette fibre présente une dispersion chromatique et une pente de dispersion chromatique ayant un signe opposé à celui de la dispersion chromatique et de la pente de dispersion chromatique de la fibre de ligne. Un exemple dans le cas d'une fibre de ligne SMF est donné dans L. Grüner-Nielsen et autres, Large volume Manufacturing of dispersion compensating fibers, OFC'98 Technical Digest TuD5.

EP-A-0 935 146 propose des fibres de compensation de dispersion adaptées à compenser la dispersion chromatique et la pente de dispersion chromatique de fibres SMF, dans la plage de longueur d'onde autour de 1550 nm. Autour de cette longueur d'onde, ces fibres présentent un rapport entre la dispersion chromatique et la pente de dispersion chromatique qui est voisin du rapport entre la dispersion chromatique et la pente de dispersion chromatique de la fibre de ligne. Ce document propose différents profils de fibre; la figure 3 montre une fibre présentant un profil d'indice en rectangle avec une tranchée enterrée et un anneau.

Par rapport à ce document, l'invention se propose de résoudre le problème nouveau de la compensation de la dispersion chromatique des fibres SMF dans la bande S; on appelle ici bande S la bande s'étendant entre 1450 et 1500 nm ou entre 1460 et 1490 nm, ou autour de 1475 nm. Cette bande présente un intérêt grandissant avec l'augmentation du nombre de canaux des systèmes de transmission terrestres à multiplexage en longueurs d'onde. L'invention propose une solution adaptée à des transmissions à haut débit, sur des largeurs de bande importantes, dans les systèmes de transmission existants.

Plus précisément, l'invention propose une fibre optique monomode à 1475 nm et présentant pour cette longueur d'onde une dispersion chromatique inférieure à -40 ps/(nm.km), un rapport entre la dispersion chromatique et la pente de dispersion chromatique inférieur à 250 nm et une aire effective supérieure ou égale à 14 $\mu m^2$.

Avantageusement, la fibre présente une aire effective supérieure à 13 $\mu m^2$ à 1450 nm. Elle peut aussi présenter à 1475 nm une dispersion chromatique supérieure ou égale à -150 ps/(nm.km).

Dans un mode de réalisation, la fibre présente à 1475 nm une dispersion chromatique inférieure ou égale à -60 ps/(nm.km). La fibre peut encore présenter pour une longueur d'onde de 1475 nm un rapport entre la dispersion chromatique et la pente de dispersion chromatique compris entre 170 et 230 nm.

Dans un autre mode de réalisation, la fibre présente des pertes par courbure inférieures à $10^{-3}$ dB pour un enroulement de 100 tours de fibre sur un rayon de 30 mm, pour une longueur d'onde de 1500 nm. Elle peut encore présenter des pertes par courbure inférieures à 100 dB/m à une longueur d'onde de 1500 nm pour une boucle de fibre sur un rayon de 10 mm.

De préférence, la fibre présente pour une longueur d'onde de 1475 nm une atténuation inférieure à 1.2 dB/km. Dans encore un mode de réalisation, la fibre présente pour une longueur d'onde de 1475 nm un diamètre de mode supérieur à 4 μm. Elle peut aussi présenter pour une longueur d'onde de 1475 nm une sensibilité aux micro-courbures inférieure à 1, et de préférence inférieure ou égale à 0.5.

Il est aussi avantageux que la fibre présente une longueur d'onde de coupure théorique supérieure à 1100 nm et inférieure à 1800 nm, de préférence 1700 nm, voire 1600 nm.

Pour ce qui est du profil, la fibre présente un profil d'indice en rectangle avec une tranchée déprimée et un anneau, ou un profil d'indice en trapèze avec une tranchée déprimée et un anneau.

La différence entre l'indice du rectangle ou de l'anneau et l'indice de la gaine est comprise entre $16.10^{-3}$ et $25.10^{-3}$, et le rayon de la partie de la fibre présentant un indice supérieur à celui de la gaine est compris entre 1,3 et 2,3 μm.

La différence entre l'indice de la tranchée déprimée et l'indice de la gaine est comprise entre $-9.10^{-3}$ et $-5.10^{-3}$, et le rayon extérieur de cette tranchée est compris entre 3,7 et 6 μm.

La différence entre l'indice de l'anneau et l'indice de la gaine est comprise entre $3.10^{-3}$ et $11.10^{-3}$, et le rayon extérieur de cet anneau est compris entre 6,6 et 8,3 μm.

De préférence, le double de l'intégrale du produit du rayon par l'indice entre un rayon nul et le rayon extérieur de la partie centrale de la fibre présentant un indice supérieur à celui de la gaine est compris entre $30.10^{-3}$ et $60.10^{-3}$ μm$^2$.

On peut aussi prévoir que le produit du carré du rayon extérieur de la tranchée déprimée par l'indice de la tranchée déprimée est compris entre $-300.10^{-3}$ et $-110.10^{-3}$ μm$^2$.

Il est encore possible que le produit de l'épaisseur de l'anneau par l'indice de l'anneau est compris entre $7.10^{-3}$ et $14.5.10^{-3}$ μm.

L'invention propose encore un système de transmission, dont la fibre de ligne comprend une fibre monomode à saut d'indice, compensée en dispersion dans la bande S selon les revendications 1 à 14. Il est avantageux que la dispersion chromatique cumulée pour chaque canal entre 1460 et 1490 nm soit en valeur absolue inférieure à 100 ps/nm en moyenne sur 100 km de transmission.

La fibre de ligne peut être constituée de fibre monomode à saut d'indice, ou encore de fibre monomode à saut d'indice et de fibre de compensation de dispersion. La fibre proposée plus haut est utilisée dans un tel système de transmission, comme fibre de compensation de dispersion.

L'invention propose enfin un module de compensation de dispersion, comprenant un amplificateur et une section d'une telle fibre.

D'autres caractéristiques et avantages de l'invention apparaîtront à la lecture de la description qui suit de modes de réalisation de l'invention, donnés à titre d'exemple et en référence aux dessins annexés, qui montrent :

- figures 1 et 2, des représentations schématiques de modes de réalisation d'un système de transmission selon l'invention;
- figures 3 et 4, des exemples de profil de fibres selon l'invention.

L'invention propose une fibre de compensation de dispersion chromatique adaptée à compenser la dispersion chromatique d'une fibre monomode à saut d'indice dans la bande S; la fibre est monomode à 1475 nm. Elle présente une dispersion chromatique inférieure à -40 ps/(nm.km) autour de 1475 nm, une pente de dispersion chromatique inférieure à -0.16 ps/(nm$^2$.km) et une aire effective supérieure ou égale à 14 μm$^2$ autour de cette même valeur de longueur d'onde. On peut aussi prévoir que le rapport entre la dispersion chromatique et la pente de dispersion chromatique présente une valeur inférieure à 250 nm autour de cette longueur d'onde de 1475 nm; ceci assure une dispersion cumulée pour chaque canal entre 1450 nm et 1500 nm inférieure en valeur absolue à 70 ps/nm, en moyenne sur une transmission de 100 km, lorsque la fibre est utilisée comme fibre de compensation d'une fibre SMF.

La fibre de l'invention permet de compenser la dispersion chromatique et la pente de dispersion chromatique pour des systèmes de transmission en bande S utilisant comme fibre de ligne de la fibre monomode à saut d'indice classique. Comme indiqué plus haut, la fibre SMF présente typiquement autour de 1550 nm une dispersion chromatique de 15 à 20 ps/(nm.km) et une pente de dispersion chromatique autour de 0.06 ps/(nm$^2$.km). Dans la bande S, pour une longueur d'onde de 1475 nm, la fibre SMF présente une dispersion chromatique voisine de 13 ps/(nm.km) et une pente de dispersion chromatique de l'ordre de 0.064 ps/(nm$^2$.km). Le rapport entre la dispersion chromatique et la pente de dispersion chromatique est voisin de 200 nm. Pour cette longueur d'onde, la fibre de compensation de l'état de la technique - celle de EP-A-0 935 146 par exemple - n'est pas adaptée à la compensation de la dispersion chromatique et de la pente de dispersion chromatique; typiquement, le rapport entre la dispersion chromatique et la pente de dispersion chromatique dans cette fibre de l'état de la technique est supérieur à 250 voire 300 nm. Même si cette fibre de compensation de dispersion était utilisée en bande S pour des systèmes de transmission à fibre de ligne SMF, elle ne pourrait assurer qu'une compensation partielle de la dispersion chromatique et de la pente de dispersion chromatique. Par exemple, pour un rapport de 300 nm, la dispersion cumulée en valeur absolue sur une transmission de 100 km excèderait 100 ps/nm pour des canaux centrés à 1450 et 1500 nm.

L'invention concerne aussi les systèmes de transmission par fibre optique, dont la fibre de ligne comprend une fibre SMF, c'est-à-dire une fibre présentant à 1550 nm une dispersion chromatique entre 15 et 20 ps/(nm.km) et une pente de dispersion chromatique entre 0.055 et 0.060 ps/(nm$^2$.km). Une telle fibre de ligne peut aussi être caractérisée par ses valeurs de dispersion chromatique et de pente de dispersion chromatique autour de 1475 nm, comme indiqué plus haut.

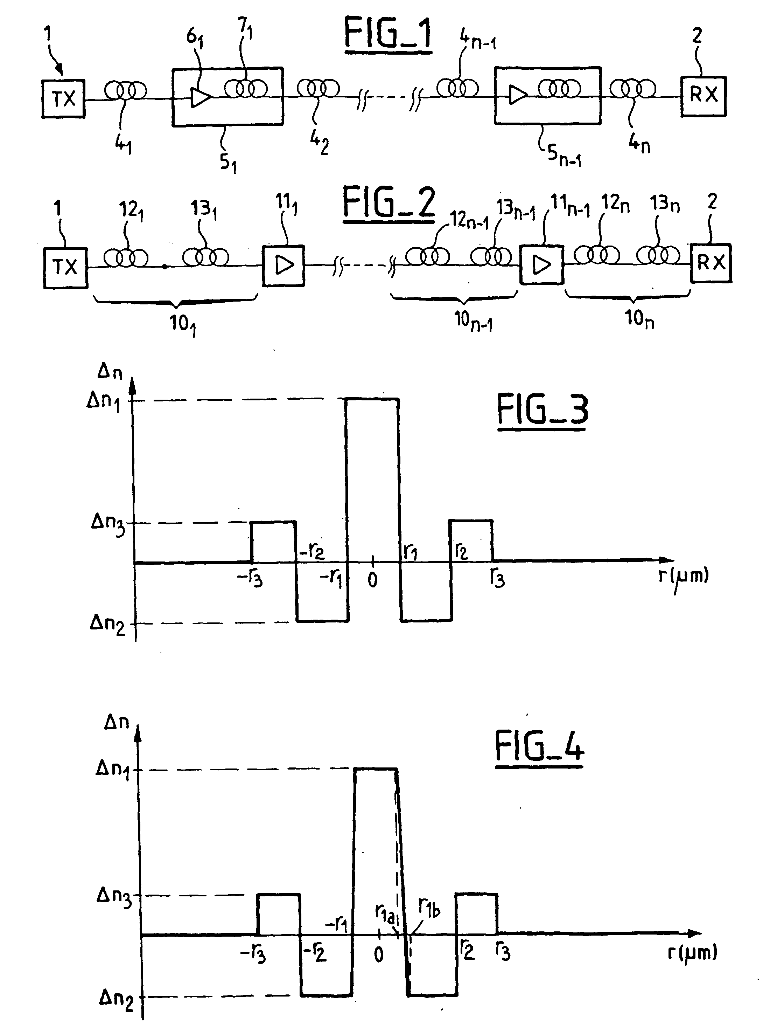

La figure 1 montre une représentation schématique d'un premier mode de réalisation d'un système de transmission selon l'invention. On a représenté sur la figure un émetteur TX 1 et un récepteur RX 2. Ces deux éléments sont reliés par une pluralité de tronçons de fibre de ligne $4_1$ à $4_n$. On entend ici par fibre de ligne la fibre s'étendant le long du système de transmission, et dont la longueur correspond sensiblement à la longueur du système. Dans le mode de réalisation de la figure 1, la fibre de ligne est constituée de fibre SMF. Entre les tronçons sont disposés des modules de compensation de dispersion $5_1$ à $5_{n-1}$. Un module de compensation de dispersion $5_i$ comprend un amplificateur $6_i$, suivi d'une section de fibre de compensation de dispersion $7_i$. Ne sont pas portés à la figure les filtres et autres éléments sans incidence directe sur le fonctionnement de l'invention.

La lumière provenant de la fibre SMF est amplifiée, puis traverse la section de fibre de compensation de dispersion, dans laquelle la dispersion chromatique et la pente de dispersion chromatique sont compensées. On pourrait aussi inverser les positions respectives dans le module de compensation de la fibre de dispersion de compensation et de l'amplificateur.

La figure 2 montre un autre mode de réalisation d'un système de transmission selon l'invention. Dans le mode de réalisation de la figure 2, la fibre de compensation de dispersion est aussi utilisée comme fibre de ligne. On retrouve sur la figure l'émetteur TX 1 et le récepteur RX 2. Ces deux éléments sont reliés par une pluralité de tronçons de fibre de ligne $10_i$, séparés par des répéteurs $11_i$. Chaque répéteur comprend des amplificateurs, filtres ou autres éléments connus en soi, et n'est pas décrit plus en détail. Chaque tronçon de fibre de ligne $10_i$ comprend une section $12_i$ de fibre SMF, et une section $13_i$ de fibre de compensation de dispersion selon l'invention.

Les modes de réalisation des figures 1 et 2 constituent deux extrêmes : dans le mode de réalisation de la figure 1, la fibre de ligne est uniquement de la fibre SMF, et toute la fibre de compensation de dispersion est prévue dans des répéteurs discrets. Dans ce cas, la fibre de compensation de dispersion ne contribue aucunement à la longueur du système de transmission. Ce mode de réalisation est particulièrement adapté à des liaisons en fibre SMF existantes, qui peuvent ainsi être modifiées pour permettre une transmission en bande S. A l'inverse, dans le mode de réalisation de la figure 2, la fibre de compensation de dispersion sert de fibre de ligne, et les répéteurs ne comprennent pas de fibre de compensation de dispersion. Des solutions intermédiaires entre la solution de la figure 1 et celle de la figure 2 sont possibles.

Dans un cas comme dans l'autre les longueurs respectives $L_{DCF}$ et $L_F$ de la fibre de compensation de dispersion et de la fibre de ligne désignée F sont choisies idéalement de sorte à ce que:

$$L_{DCF} \times C_{DCF} = - L_F \times C_F \qquad (1)$$

où $C_{DCF}$ est la dispersion chromatique de la fibre de compensation de dispersion à 1475 nm, et $C_F$ la dispersion chromatique de la fibre de ligne à 1475 nm. Cette relation assure que la dispersion chromatique cumulée dans la fibre de ligne est compensée dans la fibre de compensation de dispersion. On peut relâcher cette contrainte et admettre que la dispersion cumulée reste inférieure à 10 ps/nm à 1475 nm après une transmission de 100 km. On choisit aussi une dispersion chromatique fortement négative afin de pouvoir utiliser une longueur de fibre de compensation la plus faible possible.

A titre d'exemple, on peut considérer un système de transmission du genre de celui de la figure 1, avec des tronçons de fibre de ligne SMF d'une longueur $L_{SMF}$ de 100 km, et une longueur $L_{DCF}$ de fibre de 20 km dans les répéteurs. A 1475 nm, la fibre SMF présente une dispersion chromatique d'environ 13 ps/(nm.km) et une pente de dispersion chromatique de 0,064 ps/(nm$^2$.km); la fibre DCF est une fibre du genre décrit en référence à la figure 3, avec pour une longueur d'onde de 1475 nm une dispersion chromatique de -65 ps/(nm.km) et une pente de dispersion chromatique de -0,33 ps/(nm$^2$.km). Dans un tel cas, la dispersion chromatique cumulée à 1475 nm est proche de 0 ps/nm. Pour un signal multiplexé en longueurs d'onde entre 1450 et 1500 nm, la dispersion chromatique cumulée est inférieure à 20 ps/nm pour chaque canal, pour les 100 km que forme un tronçon du système de transmission. On arrive de la sorte à limiter la dispersion chromatique cumulée à des valeurs inférieures à quelques dizaines de ps/nm, comme indiqué plus haut. En moyenne, pour 100 km de transmission sur chaque canal de la bande S, on limite la dispersion chromatique cumulée à moins de 20 ps/nm.

La compensation de la pente de dispersion en même temps que la dispersion chromatique dépend du rapport entre la dispersion chromatique et la pente de dispersion chromatique dans la fibre SMF et dans la fibre de compensation de dispersion. Dans un cas idéal, en notant respectivement $R_{SMF}$ et $R_{DCF}$ ce rapport dans la fibre SMF et dans la fibre de compensation de dispersion, on a $R_{SMF} = R_{DCF}$ à la longueur d'onde de 1475 nm, ce qui assure que la pente de dispersion chromatique est bien compensée autour de 1475 nm si la dispersion chromatique cumulée est elle-même bien compensée à 1475 nm, inférieure à 10 ps/nm à cette longueur d'onde.

En gardant un rapport $R_{DCF}$ inférieur à 250 nm, on est assuré que la dispersion chromatique cumulée sur 100 km de transmission reste inférieure à 50ps/nm pour chaque canal entre 1460 et 1490 nm d'un multiplex d'une largeur de 30 nm centré autour de la longueur d'onde de 1475 nm. En augmentant la plage d'utilisation, entre 1450 et 1500 nm, la dispersion cumulée reste en valeur absolue inférieure à 70 ps/nm - cette valeur maximale étant atteinte pour un rapport $R_{DCF}$ de 250 nm.

Pour un rapport $R_{DCF}$ au-dessus de 250 nm, la dispersion chromatique cumulée en valeur absolue augmente en moyenne pour l'ensemble des canaux d'un multiplex centré autour de la longueur d'onde de 1475 nm. L'invention propose donc que la fibre présente un rapport entre la dispersion chromatique et la pente de dispersion chromatique qui reste inférieur à 250 nm afin de minimiser, en valeur absolue, la dispersion chromatique cumulée moyenne entre 1450 et 1500 nm pour une longueur de transmission donnée.

On décrit maintenant les caractéristiques de la fibre de compensation de dispersion de l'invention, avant d'en donner un mode de réalisation. La fibre présente pour une longueur d'onde de 1475 nm une dispersion chromatique négative et une pente de dispersion chromatique négative, de sorte à pouvoir compenser la dispersion chromatique et la pente de dispersion chromatique de la fibre SMF. La dispersion chromatique est inférieure à -40 ps/(nm.km), par exemple est comprise entre -150 et -40 ps/(nm.km). Elle présente une pente de dispersion chromatique comprise entre - 0.5 ps/(nm$^2$.km) et -0,16 ps/(nm$^2$.km). Alternativement, on peut prévoir que le rapport entre la dispersion chromatique et la pente de dispersion chromatique est voisin de 200 nm, qui est très proche de la valeur du rapport entre la dispersion chromatique et la pente de dispersion chromatique de la fibre SMF. A 1475 nm, il est avantageux que ce rapport soit compris entre 170 et 230 nm. En outre, la fibre est monomode à 1475 nm.

Comme indiqué plus haut, il est avantageux que la fibre présente des pertes par courbure faibles. Ces pertes par courbures sont évaluées, de façon connue en soi, en mesurant les pertes engendrées par l'enroulement de la fibre. On peut par exemple entourer 100 tours de la fibre autour d'un manchon de 30 mm de rayon, et .. mesurer les pertes induites por enroulement; on peut aussi simplement former une boucle de fibre autour d'un manchon de 10 mm de rayon, et mesurer les pertes linéaires. Dans un cas comme dans l'autre, les pertes par courbure sont une fonction croissante de la longueur d'onde, et le comportement de la fibre à 1475 nm est toujours meilleur que le comportement de la fibre à 1500 nm; il suffit donc, pour garantir un bon fonctionnement dans la bande S, de déterminer les caractéristiques de la fibre autour de 1500 nm. Selon l'invention, la fibre présente de préférence à 1500 nm des pertes par courbure mesurées pour 100 tours de fibre enroulée sur un rayon de 30 mm qui sont inférieures à 10$^{-3}$ dB. Cette limite sur les pertes par courbure assure que la fibre de compensation de dispersion peut être enroulée dans un répéteur, comme dans le mode de réalisation de la figure 1, ou supporte la mise en câble comme dans le mode de réalisation de la figure 2. On pourrait aussi imposer que les pertes par courbure mesurées dans une boucle de fibre de 10 mm de rayon soient inférieures à 100 dB/m à 1500 nm.

Il est avantageux que la fibre présente aussi une ou plusieurs des caractéristiques suivantes :

- une dispersion chromatique inférieure à -60 ps/(nm.km) à 1475 nm;
- une longueur d'onde de coupure mesurée sur 2 m inférieure à 1450 nm;
- une longueur d'onde de coupure effective en câble inférieure à 1300 nm;
- une longueur d'onde de coupure théorique supérieure à 1100 nm et inférieure à 1800 nm, voire 1700 nm ou 1600 nm;
- une aire effective supérieure à 14 μm$^2$, de préférence supérieure à 13 μm$^2$ à 1450 nm;
- une sensibilité aux micro-courbures inférieure à 1, ou de préférence inférieure ou égale à 0.5;
- un diamètre de mode supérieur à 4 μm pour une longueur d'onde supérieure à 1450 nm.

La valeur proposée de dispersion chromatique permet de limiter la longueur de fibre de compensation de dispersion utilisée dans le système. En augmentant la longueur d'onde de coupure théorique au-dessus de 1100 nm, de meilleurs compromis sur les caractéristiques de propagation peuvent être trouvés. Avec une longueur d'onde de coupure théorique inférieure à 1600 nm, on assure que la fibre est toujours monomode en bande S, pour la plupart des profils d'indice. Pour une longueur d'onde de coupure théorique supérieure à 1600 nm, il est possible que pour certains profils la fibre ne soit plus monomode en bande S. Avec une longueur d'onde de coupure effective selon la norme UIT-T G650 inférieure à 1450 nm, le fonctionnement monomode de la fibre de compensation dans la bande S est assuré. La valeur de l'aire effective limite les effets non-linéaires susceptibles d'apparaître à forte puissance du signal se propageant dans la fibre de compensation, notamment dans le mode de réalisation de la figure 1 d'un système de transmission selon l'invention. Une valeur d'aire effective supérieure à 14 $\mu$m$^2$ à 1475 nm permet de limiter les effets non-linéaires dans toute la bande S. La sensibilité de la fibre aux micro-courbures est évaluée de façon relative, par rapport à la fibre commercialisée par la demanderesse sous la référence ASMF 200; on peut employer la méthode d'écrasement de la fibre entre deux grilles, connue en soi.

La figure 3 montre une représentation schématique du profil d'indice de consigne d'une fibre selon l'invention; dans ce mode de réalisation, le profil d'indice est un profil d'indice du type en rectangle, avec une tranchée enterrée et un anneau, qui présente, en partant du centre de la fibre:

- une partie centrale avec un indice sensiblement constant supérieur ou égal à l'indice de la gaine;
- une partie annulaire d'indice inférieur ou égal à l'indice de la gaine ; l'ensemble constituant un profil d'indice dit "en rectangle avec une tranchée enterrée ou déprimée".

Autour de la tranchée enterrée, la fibre de la figure 3 présente un anneau, c'est-à-dire une partie d'indice supérieur à l'indice de la gaine, d'où le qualificatif de profil en rectangle avec une tranchée enterrée et un anneau.

Les valeurs d'indices et de rayons dans le mode de réalisation de la figure 3 sont les suivantes. Le rectangle central présente un rayon $r_1$ de 1,66 $\mu$m et son indice présente avec l'indice de la gaine une différence $\Delta n_1$ de 18,4.10$^{-3}$.

La tranchée enterrée s'étend entre les rayons $r_1$ et $r_2$, avec $r_2$ = 4,68 $\mu$m, et son indice présente avec l'indice de la gaine une différence $\Delta n_2$ de -7,0.10$^{-3}$.

Autour de la tranchée s'étend l'anneau, entre les rayons $r_2$ et $r_3$, avec $r_3$ = 7,2 $\mu$m; elle présente par rapport à la gaine une différence d'indice $\Delta n_3$ de 4,1.10$^{-3}$.

Autour de l'anneau s'étend la gaine de la fibre, par rapport à laquelle sont mesurées les différences d'indice.

Ces valeurs permettent d'obtenir une fibre présentant les caractéristiques suivantes:

- longueur d'onde de coupure théorique $\lambda_{cth}$ : 1600 nm
- aire effective à 1475 nm : 17 $\mu$m$^2$;
- dispersion chromatique à 1475 nm : -65 ps/(nm.km);
- pente de dispersion chromatique à 1475 nm : - 0,33 ps/(nm$^2$.km);
- rapport entre la dispersion chromatique et la pente de dispersion chromatique : 197 nm;
- diamètre de mode 2W02 à 1475 nm : 4,62 $\mu$m;
- pertes par courbures à 1475 nm et 1500 nm, pour 100 tours d'une bobine de rayon 30 mm, inférieures à 10$^{-3}$ dB;
- sensibilité aux micro-courbures à 1475 nm : 0,2.

La longueur d'onde de coupure donnée ici est la longueur d'onde de coupure théorique; dans la pratique, la longueur d'onde de coupure mesurée sur câble est inférieure de plusieurs centaines de nm ; on comprend que la fibre est effectivement monomode dans la plage de longueurs d'onde des signaux utiles, par exemple de 1460 à 1490 nm.

Dans un autre exemple de réalisation, la fibre présente le même profil, mais avec les valeurs suivantes des indices et des rayons:

| $r_1$ ($\mu$m) | $r_2$ ($\mu$m) | $r_3$ ($\mu$m) | 10$^3$.$\Delta n_1$ | 10$^3$.$\Delta n_2$ | 10$^3$.$\Delta n_3$ |
|---|---|---|---|---|---|
| 1.45 | 4.39 | 7.174 | 22.2 | -6.9 | 4.6 |

Ces valeurs permettent d'obtenir les caractéristiques de propagation suivantes:

| $\lambda$cth (nm) | Aeff ($\mu$m$^2$) | C (ps/nm/km) | dC/d$\lambda$ (ps/nm$^2$/km) | C/(dC/d$\lambda$) (nm) | 2W$_{02}$ ($\mu$m) |
|---|---|---|---|---|---|
| 1629 | 15.1 | -101.8 | -0.51 | 201 | 4.56 |

La figure 4 montre encore un autre profil d'une fibre selon l'invention. Dans ce mode de réalisation, la fibre présente un profil en trapèze avec une tranchée enterrée et un anneau. Autrement dit, en partant du centre de la fibre, on trouve:

- une partie centrale avec un indice sensiblement constant supérieur ou égal à l'indice de la gaine;
- une partie annulaire d'indice inférieur ou égal à l'indice de la gaine ; ces deux parties étant séparées par une partie annulaire dans laquelle l'indice décroît, de façon sensiblement linéaire. L'ensemble constitue un profil d'indice dit "en trapèze avec une tranchée enterrée ou déprimée".

Autour de cette tranchée enterrée, on trouve comme dans le mode de réalisation de la figure 3 un anneau.

Par analogie avec le mode de réalisation de la figure 3, on peut comme représenté sur la figure 4 noter:

- $r_{1a}$ le rayon de la petite base du trapèze, i.e. le rayon de la partie centrale d'indice sensiblement constant;
- $r_{1b}$ le rayon de la grande base du trapèze, i.e. le rayon intérieur de la tranchée déprimée;
- $r_1$ le rayon du trapèze pour lequel l'indice est égal à l'indice de la gaine;
- $r_2$ le rayon extérieur de la tranchée déprimée;
- $r_3$ le rayon extérieur de l'anneau.

Les indices et les rayons peuvent alors présenter les valeurs suivantes :

| $r_{1a}/r_{1b}$ | $r_1$ (µm) | $r_2$ (µm) | $r_3$ (µm) | $10^3.\Delta n_1$ | $10^3.\Delta n_2$ | $10^3.\Delta n_3$ |
|---|---|---|---|---|---|---|
| 0.73 | 1.97 | 5.25 | 7.71 | 18 | -5.9 | 5.15 |

On obtient dans ce cas une fibre présentant les caractéristiques de propagation suivantes :

| $\lambda$cth (nm) | Aeff (µm$^2$) | C (ps/nm/km) | dC/d$\lambda$ (ps/nm$^2$/km) | C/(dC/d$\lambda$) (nm) | $2W_{02}$ (µm) |
|---|---|---|---|---|---|
| 1698 | 17.6 | -53 | -0.256 | 207 | 4.73 |

De façon générale, on peut donc qualifier le profil de la fibre comme suit. D'une part, le profil est un profil en trapèze ou en rectangle avec une tranchée enterrrée ou déprimée, et un anneau. La partie centrale présente une différence avec l'indice de la gaine qui vérifie

$$16.10^{-3} \leq \Delta n_1 \leq 25.10^{-3}$$

On peut appeler $r_1$ comme indiqué plus haut le rayon de la partie d'indice supérieur à l'indice de la gaine - l'indice étant constant en dessous de $r_1$ pour un profil en rectangle, mais pas pour un profil en trapèze. Dans ce cas, il est avantageux que le rayon $r_1$ exprimé en micromètres vérifie

$$1,3 \leq r_1 \leq 2.3 \ \mu m$$

Pour la tranchée enterrée, on peut choisir les valeurs de différence d'indice $\Delta n_2$ et de rayon extérieur $r_2$ de sorte à vérifier :

$$-9.10^{-3} \leq \Delta n_2 \leq -5.10^{-3}$$

et

$$3,7 \leq r_2 \leq 6 \ \mu m$$

Pour l'anneau, on peut choisir les valeurs de différence d'indice $\Delta n_3$ et de rayon extérieur $r_3$ de sorte à vérifier :

$$3.10^{-3} \leq \Delta n_2 \leq 11.10^{-3}$$

et

$$6,6 \leq r_3 \leq 8,3 \ \mu m$$

D'autres caractérisations de la fibre sont possibles. Ainsi, on peut utiliser le paramètre S défini par

$$S = 2. \int_0^{r_1} \Delta n(r) r . dr$$

Ce paramètre est homogène au produit d'une surface par un indice. Ce paramètre s'applique simplement au profil en trapèze comme au profil en rectangle, et est représentatif de l'augmentation d'indice au voisinage du coeur de la fibre. Il vérifie de préférence :

$$30.10^{-3} \leq S \leq 60.10^{-3} \ \mu m^2$$

Pour caractériser la tranchée enterrée, on peut utiliser comme paramètre le produit du carré du rayon extérieur et de l'indice. Ce paramètre est discriminant pour les fibres de l'invention, sans qu'il soit simple de fournir une explication physique simple du paramètre. Il est donc avantageux que

$$-300.10^{-3} \leq r_2{}^2 \Delta n_2 \leq -110.10^{-3} \ \mu m^2$$

Pour l'anneau, on peut utiliser un paramètre du même genre que celui de la partie centrale, à savoir le produit de la largeur de l'anneau par la différence d'indice. Dans ce cas, il est avantageux que

$$7.10^{-3} \leq (r_3 - r_2) \Delta n_3 \leq 14,5.10^{-3} \ \mu m$$

La fibre de l'invention peut être fabriquée par l'homme du métier à l'aide de techniques connues, comme le MCVD, l'OVD ou les autres techniques couramment utilisées pour la fabrication des fibres optiques.

Bien entendu, la présente invention n'est pas limitée aux exemples et modes de réalisation décrits et représentés, mais elle est susceptible de nombreuses variantes accessibles à l'homme de l'art. On peut utiliser la fibre de l'invention dans d'autres systèmes que ceux représentés aux figures 1 et 2. On pourrait en particulier utiliser un système de transmission du genre de celui de la figure 1, avec un démultiplexeur pour séparer les signaux des bandes S, C et L. Dans un tel cas, la fibre de compensation de l'invention peut être utilisée pour compenser la dispersion chromatique dans la bande S, et d'autres fibres de compensation de dispersion sont utilisées pour compenser la dispersion dans la bande C et/ou dans la bande L. On peut aussi dans le schéma de la figure 1 rajouter un amplificateur après la fibre de dispersion de compensation -soit un schéma ampli+DCF+ampli, c'est-à-dire une amplification à double étage.

On peut aussi obtenir une fibre selon l'invention avec un profil différent de celui des figures 3 ou 4.

## Revendications

1. Une fibre optique monomode à 1475 nm et présentant pour cette longueur d'onde une dispersion chromatique inférieure à -40 ps/(nm.km), un rapport entre la dispersion chromatique et la pente de dispersion chromatique inférieur à 250 nm, une aire effective supérieure ou égale à 14 $\mu m^2$ ,
   la fibre optique présentant un profil d'indice en redangle ou en trapèze avec une tranchée déprimée et un anneau ,
   la différence ($\Delta n_1$) entre l'indice du rectangle ou du trapèze et l'indice de la gaine étant comprise entre $16.10^{-3}$ et $25.10^{-3}$, et le rayon ($r_1$) de la partie de la fibre présentant un indice supérieur à celui de la gaine étant compris entre 1,3 et 2.3 $\mu m$,
   la différence ($\Delta n_2$) entre l'indice de la tranchée déprimée et l'indice de la gaine étant comprise entre $-9.10^{-3}$ et $-5.10^{-3}$, et le rayon extérieur ($r_2$) de cette tranchée étant compris entre 3,7 et 6 $\mu m$,
   la différence ($\Delta n_3$) entre l'indice de l'anneau et l'indice de la gaine étant comprise entre $3.10^{-3}$ et $11.10^{-3}$, et le rayon extérieur ($r_3$) de cet anneau étant compris entre 6,6 et 8,3 $\mu m$.

2. La fibre de la revendication 1, **caractérisée en ce qu'**elle présente une aire effective supérieure à 13 $\mu m^2$ à 1450 nm.

3. La fibre de la revendication 1 ou 2, **caractérisée en ce qu'**elle présente à 1475 nm une dispersion chromatique

**EP 1 202 087 B1**

supérieure ou égale à -150 ps/(nm.km).

**4.** La fibre de la revendication 1, 2 ou 3, **caractérisée en ce qu'**elle présente à 1475 nm une dispersion chromatique inférieure ou égale à -60 ps/(nm.km).

**5.** La fibre de l'une des revendications 1 à 4, **caractérisée en ce qu'**elle présente pour une longueur d'onde de 1475 nm un rapport entre la dispersion chromatique et la pente de dispersion chromatique compris entre 170 et 230 nm.

**6.** La fibre de l'une des revendications 1 à 5, **caractérisée en ce qu'**elle présente des pertes par courbure inférieures à $10^{-3}$ dB pour un enroulement de 100 tours de fibre sur un rayon de 30 mm, pour une longueur d'onde de 1500 nm.

**7.** La fibre de l'une des revendications 1 à 6, **caractérisée en ce qu'**elle présente des pertes par courbure inférieures à 100 dB/m à une longueur d'onde de 1500 nm pour une boucle de fibre sur un rayon de 10 mm.

**8.** La fibre de l'une des revendications 1 à 7, **caractérisée en ce qu'**elle présente pour une longueur d'onde de 1475 nm une atténuation inférieure à 1.2 dB/km.

**9.** La fibre de l'une des revendications 1 à 8, **caractérisée en ce qu'**elle présente pour une longueur d'onde de 1475 nm un diamètre de mode supérieur à 4 $\mu$m.

**10.** La fibre de l'une des revendications 1 à 9, **caractérisée en ce qu'**elle présente pour une longueur d'onde de 1475 nm une sensibilité aux micro-courbures inférieure à 1, et de préférence inférieure ou égale à 0.5.

**11.** La fibre de l'une des revendications 1 à 10, **caractérisée en ce qu'**elle présente une longueur d'onde de coupure théorique supérieure à 1100 nm et inférieure à 1800 nm, de préférence 1700 nm, voire 1600 nm.

**12.** La fibre de l'une des revendications 1 à 11, **caractérisée en ce que** le double de l'intégrale du produit du rayon par l'indice entre un rayon nul et le rayon ($r_1$) extérieur de la partie centrale de la fibre présentant un indice supérieur à celui de la gaine est compris entre $30.10^{-3}$ et $60.10^{-3}$ $\mu$m$^2$.

**13.** La fibre de l'une des revendications 1 à 12, **caractérisée en ce que** le produit du carré du rayon extérieur ($r_2$) de la tranchée déprimée par l'indice de la tranchée déprimée est compris entre $-300.10^{-3}$ et $-110.10^{-3}$ $\mu$m$^2$.

**14.** La fibre de l'une des revendications 1 à 13, **caractérisée en ce que** le produit de l'épaisseur ($r_3 - r_2$) de l'anneau par l'indice de l'anneau est compris entre $7.10^{-3}$ et $14.5.10^{-3}$ $\mu$m.

**15.** Un système de transmission, dont la fibre de ligne comprend une fibre monomode à saut d'indice ($4_i$, $12_i$), compensée en dispersion dans la bande S par une fibre selon l'une des revendications 1 à 14.

**16.** Le système de la revendication 15, **caractérisé en ce que** la dispersion chromatique cumulée pour chaque canal entre 1460 et 1490 nm est en valeur absolue inférieure à 100 ps/nm en moyenne sur 100 km de transmission.

**17.** Un module de compensation de dispersion, comprenant un amplificateur et une section de fibre selon l'une des revendications 1 à 14.

**Claims**

**1.** An optical fibre which is single-mode at 1475 nm and which, for that wavelength, has a chromatic dispersion of less than -40 ps/(nm.km), a ratio between the chromatic dispersion and the chromatic dispersion slope of less than 250 nm and an effective area greater than or equal to 14 $\mu$m$^2$,
the optical fibre having a rectangular or trapezoidal index profile with a depressed trough and a ring,
the difference ($\Delta n_1$) between the index of the rectangle or trapezium and the index of the cladding being between $16 \times 10^{-3}$ and $25 \times 10^{-3}$ inclusive, and the radius ($r_1$) of that portion of the fibre which has an index greater than that of the cladding being between 1.3 and 2.3 $\mu$m inclusive,
the difference ($\Delta n_2$) between the index of the depressed trough and the index of the cladding being between $-9 \times 10^{-3}$ and $-5 \times 10^{-3}$ inclusive, and the outer radius ($r_2$) of that trough being between 3.7 and 6 $\mu$m inclusive,
the difference ($\Delta n_3$) between the index of the ring and the index of the cladding being between $3 \times 10^{-3}$ and $11 \times 10^{-3}$

9

inclusive, and the outer radius ($r_3$) of that ring being between 6.6 and 8.3 µm inclusive.

2. The fibre of claim 1, **characterised in that** it has an effective area greater than 13 µm$^2$ at 1450 nm.

3. The fibre of claim 1 or 2, **characterised in that** it has, at 1475 nm, a chromatic dispersion greater than or equal to -150 ps/(nm.km).

4. The fibre of claim 1, 2 or 3, **characterised in that** it has, at 1475 nm, a chromatic dispersion less than or equal to -60 ps/(nm.km).

5. The fibre of one of claims 1 to 4, **characterised in that** it has, for a wavelength of 1475 nm, a ratio between the chromatic dispersion and the chromatic dispersion slope of between 170 and 230 nm inclusive.

6. The fibre of one of claims 1 to 5, **characterised in that** it has bend losses of less than 10$^{-3}$ dB for a winding of 100 turns of fibre on a radius of 30 mm, for a wavelength of 1500 nm.

7. The fibre of one of claims 1 to 6, **characterised in that** it has bend losses of less than 100 dB/m at a wavelength of 1500 nm for a loop of fibre on a radius of 10 mm.

8. The fibre of one of claims 1 to 7, **characterised in that** it has, for a wavelength of 1475 nm, an attenuation of less than 1.2 dB/km.

9. The fibre of one of claims 1 to 8, **characterised in that** it has, for a wavelength of 1475 nm, a mode diameter greater than 4 µm.

10. The fibre of one of claims 1 to 9, **characterised in that** it has, for a wavelength of 1475 nm, a sensitivity to microbending of less than 1, preferably less than or equal to 0.5.

11. The fibre of one of claims 1 to 10, **characterised in that** it has a theoretical cutoff wavelength greater than 1100 nm and less than 1800 mm, preferably 1700 nm, especially 1600 nm.

12. The fibre of one of claims 1 to 11, **characterised in that** twice the integral of the product of the radius and the index between zero radius and the outer radius ($r_1$) of the central portion of the fibre having an index greater than that of the cladding is between 30x10$^{-3}$ and 60x10$^{-3}$ µm$^2$ inclusive.

13. The fibre of one of claims 1 to 12, **characterised in that** the product of the square of the outer radius ($r_2$) of the depressed trough and the index of the depressed trough is between -300x10$^{-3}$ and -110x10$^{-3}$ µm$^2$ inclusive.

14. The fibre of one of claims 1 to 13, **characterised in that** the product of the thickness ($r_3 - r_2$) of the ring and the index of the ring is between 7x10$^{-3}$ and 14.5x10$^{-3}$ µm$^2$ inclusive.

15. A transmission system in which the line fibre comprises a single-mode stepped index fibre ($4_i$, $12_i$) dispersion-compensated in the S-band by a fibre according to one of claims 1 to 14.

16. The system of claim 15, **characterised in that** the cumulative chromatic dispersion for each channel between 1460 and 1490 nm has an absolute value of less than 100 ps/nm on average over 100 km of transmission.

17. A dispersion compensation module comprising an amplifier and a section of fibre according to one of claims 1 to 14.

**Patentansprüche**

1. Glasfaser mit einer Einzelmode bei 1475 nm, die für diese Wellenlänge eine chromatische Dispersion unterhalb von -40 ps/(nm·km), ein Verhältnis zwischen der chromatischen Dispersion und der Steigung der chromatischen Dispersion unterhalb von 250 nm, und eine effektive Fläche größer oder gleich 14 µm$^2$ hat, wobei
die Glasfaser ein rechteckförmiges oder trapezförmiges Indexprofil mit einer abgesenkten Schneise und einem Ring aufweist,
die Differenz ($\Delta n_1$) zwischen dem Index des Rechtecks oder des Trapezes und dem Index des Mantels zwischen 16·10⁻³ und 25·10⁻³ liegt und der Radius ($r_1$) des Teils der Faser, der einen Index größer als der des Mantels aufweist, zwischen 1,3 und 2,3 μm liegt,

die Differenz ($\Delta n_2$) zwischen dem Index der abgesenkten Schneise und dem Index des Mantels zwischen -9·10⁻³ und -5·10⁻³ liegt und der äußere Radius ($r_2$) dieser Schneise zwischen 3,7 und 6 μm liegt,

die Differenz ($\Delta n_3$) zwischen dem Index des Rings und dem Index des Mantels zwischen 3·10⁻³ und 11·10⁻³ liegt und der äußere Radius ($r_3$) dieses Rings zwischen 6,6 und 8,3 μm liegt.

2. Faser nach Anspruch 1, **dadurch gekennzeichnet, dass** sie bei 1450 nm eine effektive Fläche größer als 13 μm² aufweist.

3. Faser nach Anspruch 1 oder 2, **dadurch gekennzeichnet, dass** sie bei 1475 nm eine chromatische Dispersion größer oder gleich -150 ps/(nm·km) aufweist.

4. Faser nach Anspruch 1, 2 oder 3, **dadurch gekennzeichnet, dass** sie bei 1475 nm eine chromatische Dispersion kleiner oder gleich -60 ps/(nm·km) aufweist.

5. Faser nach einem der Ansprüche 1 bis 4, **dadurch gekennzeichnet, dass** sie für eine Wellenlänge von 1475 nm ein Verhältnis zwischen der chromatischen Dispersion und der Steigung der chromatischen Dispersion zwischen 170 und 230 nm aufweist.

6. Faser nach einem der Ansprüche 1 bis 5, **dadurch gekennzeichnet, dass** sie Krümmungsverluste geringer als 10⁻³ dB für eine Aufwicklung von 100 Umdrehungen der Faser mit einen Radius von 30 mm bei einer Wellenlänge von 1500 nm aufweist.

7. Faser nach einem der Ansprüche 1 bis 6, **dadurch gekennzeichnet, dass** sie bei einer Wellenlänge von 1500 nm Krümmungsverluste unterhalb von 100 dB/m für einen Faserring mit einem Radius von 10 mm aufweist.

8. Faser nach einem der Ansprüche 1 bis 7, **dadurch gekennzeichnet, dass** sie für eine Wellenlänge von 1475 nm eine Abschwächung unterhalb von 1,2 dB/km aufweist.

9. Faser nach einem der Ansprüche 1 bis 8, **dadurch gekennzeichnet, dass** sie für eine Wellenlänge von 1475 nm einen Modendurchmesser von über 4 μm aufweist.

10. Faser nach einem der Ansprüche 1 bis 9, **dadurch gekennzeichnet, dass** sie für eine Wellenlänge von 1475 nm eine Sensibilität für Mikrokrümmungen unterhalb von 1, vorzugsweise von 0,5 aufweist.

11. Faser nach einem der Ansprüche 1 bis 10, **dadurch gekennzeichnet, dass** sie eine theoretische Grenzwellenlänge oberhalb von 1100 nm und unterhalb von 1800 nm, vorzugsweise 1700 nm, insbesondere 1600 nm aufweist.

12. Faser nach einem der Ansprüche 1 bis 11, **dadurch gekennzeichnet, dass** das Doppelte des Integrals des Produkts aus Radius und Index vom Radius Null bis zum äußeren Radius ($r_1$) des zentralen Teils der Faser, der einen Index größer als der des Mantels aufweist, zwischen 30·10⁻³ und 60·10⁻³ μm² liegt.

13. Faser nach einem der Ansprüche 1 bis 12, **dadurch gekennzeichnet, dass** das Produkt aus dem Quadrat des äußeren Radius ($r_2$) der abgesenkten Schneise mit dem Index der abgesenkten Schneise zwischen -300·10⁻³ und -110·10⁻³ μm² liegt.

14. Faser nach einem der Ansprüche 1 bis 13, **dadurch gekennzeichnet, dass** das Produkt aus der Dicke ($r_3$-$r_2$) des Rings und dem Index des Rings zwischen 7·10⁻³ und 14,5·10⁻³ μm liegt.

15. Transmissionssystem, bei dem die Leitungsfaser eine Monomodefaser mit Indexsprung ($4_i$, $12_i$) umfasst, deren Dispersion im S-Band durch eine Faser nach einem der Ansprüche 1 bis 14 kompensiert ist.

16. System nach Anspruch 15, **dadurch gekennzeichnet, dass** die kumulierte chromatische Dispersion für jeden Kanal zwischen 1460 und 1490 nm als Absolutwert im Mittel geringer als 100 ps/nm über 100 km Transmission ist.

17. Modul zur Kompensation von Dispersion, welches einen Verstärker und einen Faserabschnitt nach einem der Ansprüche 1 bis 14 aufweist.

## FIG_1

TX — $4_1$ — $6_1$ $7_1$ / $5_1$ — $4_2$ — // — — // — $4_{n-1}$ — $5_{n-1}$ — $4_n$ — RX

1     2

## FIG_2

TX — $12_1$ $13_1$ — $11_1$ — // — — // — $12_{n-1}$ $13_{n-1}$ — $11_{n-1}$ — $12_n$ $13_n$ — RX

1     2

$10_1$     $10_{n-1}$     $10_n$

## FIG_3

$\Delta n$

$\Delta n_1$
$\Delta n_3$
$\Delta n_2$

$-r_3$   $-r_2$   $-r_1$   0   $r_1$   $r_2$   $r_3$   $r (\mu m)$

## FIG_4

$\Delta n$

$\Delta n_1$
$\Delta n_3$
$\Delta n_2$

$-r_3$   $-r_2$   $-r_1$   0   $r_{1a}$   $r_{1b}$   $r_2$   $r_3$   $r (\mu m)$